# EUROPEAN PATENT APPLICATION

(11) **EP 2 629 072 A1**
(43) Date of publication of application: **21.08.2013**
(21) Application number: 12155500.7
(22) Date of filing: 15.02.2012
(51) Int. Cl.: G01J 3/18, G01J 3/02, G01N 21/64, G01N 21/05, G01N 15/14

(54) **A light detecting system and a flow cytometer including the light detecting system**

(71) Applicant: Siemens Healthcare Diagnostics Products GmbH, 35041 Marburg (DE)
(72) Inventor: Kalambur, Venkatasubramaniam, 560066 Bangalore (IN); Akur Venkatesan, Varun, 560102 Bangalore (IN); MS, Ragavendar, 562123 Bangalore (IN)

(57) **Abstract**

A light detecting system (1) including a wavelength separator (2) for receiving an array of light rays (3) having a spectrum representing a range of wavelengths and separating the array into light rays (3) of different wavelengths from the range of wavelengths, a micro-mirror module (4) having a two-dimensional matrix of micro-mirrors (5) adapted to receive the light rays (3) onto one of the micro-mirrors (5) of the matrix according to the wavelength of the light ray (3) and adapted to reflect the light rays (3) with a selected wavelength , and a detector (6) adapted to receive the light ray (3) and detect the light ray (3) reflected from the micro-mirror (5), such that, the wavelength separator (2) separates the light rays (3) at different angles according to wavelength of each of the light rays (3) to reach the light rays (3) at different columns of the two-dimensional matrix of the micro-mirror module (4).

## Description

The invention relates to a light detecting system. More particularly the system relates to a light detecting system to detect light rays of selected wavelengths.

Typically, in light detecting systems, a detector receives rays of light whose wavelengths are separated using a wavelength separator and processes the rays of light to detect the rays of light. In such cases, the detector receives the rays of light representing a continuous set of spectrum regarding a range of wavelengths.

One type of light detecting system for a flow cytometer is disclosed by US 2006/0273260 A1, where light scattered by the flow cell of the cytometer is collected by one or more optical fibers to photo detectors for measuring light signals.

The object of the present invention is to detect selectively light rays for detecting light rays of selected wavelength.

The idea of the invention is to pass an array of light rays through a wavelength separator to segregate the light rays with different wavelengths to be received by micro-mirrors arranged in a matrix forming a micro-mirror module, so that the micro-mirror module selectively reflects a ray having a selected wavelength towards a detector to detect the light ray reflected by the micro-mirror. This helps to detect the light ray of the selected wavelength.

According to one embodiment, a light detecting system including a wavelength separator, a micro-mirror module and a detector is provided, wherein the detector detects the light rays by identifying intensity of each of the light rays reflected by the micro-mirrors of the matrix of the micro-mirror module and summing up intensities of the light rays to provide a result. Using intensities of the light rays provides an easy way to detect the light rays.

According to another embodiment, the system further includes a controller for controlling selection of micro-mirrors of the matrix of micro-mirror module to be enabled to reflect the light rays of the selected wavelength onto the detector. The controller controls reflections of the light rays with particular wavelengths.

According to yet another embodiment, the micro-mirror module is electronically controlled, such that the controller is adapted to switch on the selection of micro-mirrors inside the micro-mirror module to be enabled to reflect the light rays of the selected wavelength to the detector. Electronic control provides automatic and precise control of the reflection of light rays with particular wavelengths.

According to an exemplary embodiment, the controller is adapted to control the selection of the micro-mirrors of the micro-mirror module by mechanically aligning the selection of mirrors to be enabled to reflect the light rays of selected wavelengths onto the detector. Mechanical control provides an easy way to change the control of micro-mirrors manually if requirements of the system shift to different wavelengths.

According to one embodiment, the wavelength separator is either a grating element or a prism or a combination thereof. Such wavelength separators are easily available in the market and help to quickly and cost effectively build up the light detecting system.

According to another embodiment, the detector is either a photomultiplier detector or a photo diode or a combination thereof. Using such detectors make the detecting system cost effective and efficient.

According to an exemplary embodiment, the light detecting system is being included in a flow cytometer, wherein the flow cytometer further includes a flow cell tube for receiving a fluid containing cells for analysis and adapted to pass the array of light rays through the fluid containing cells and adapted to create fluorescence and/or scatter the light rays when the light rays collide the cells. The flow cell tube and the light detection system are arranged to pass the light array through the flow cell tube by scattering and/or creating fluorescence out of the light rays by the cells onto the light detection system, such that the wavelength separator is adapted to separate each of the light rays at different angles to reach at different rows of the micro-mirror module on a basis of scattering and/or creating fluorescence out of the light rays by different cells. Use of the light detecting system as a part of a flow cytometer provides an efficient and accurate way to detect the light rays on creating fluorescence and/or being scattered by the cells in the flow cell tube.

According to one embodiment, the detector is adapted to detect the light rays by either identifying intensity of each of the light rays reflected by the micro-mirrors along a column of the micro-mirror module for determining spectral behavior of each of the cells at a particular location inside the flow cell tube, or identifying intensity of each of the light rays reflected by the micro-mirrors along a row of the micro-mirror module for determining spectral behavior of a particular cell at different locations in the flow cell tube. Such detector provides the user with a choice for analyzing the spectral behavior of the cells at a particular location or of each of the cells individually at different locations in the flow cell tube.

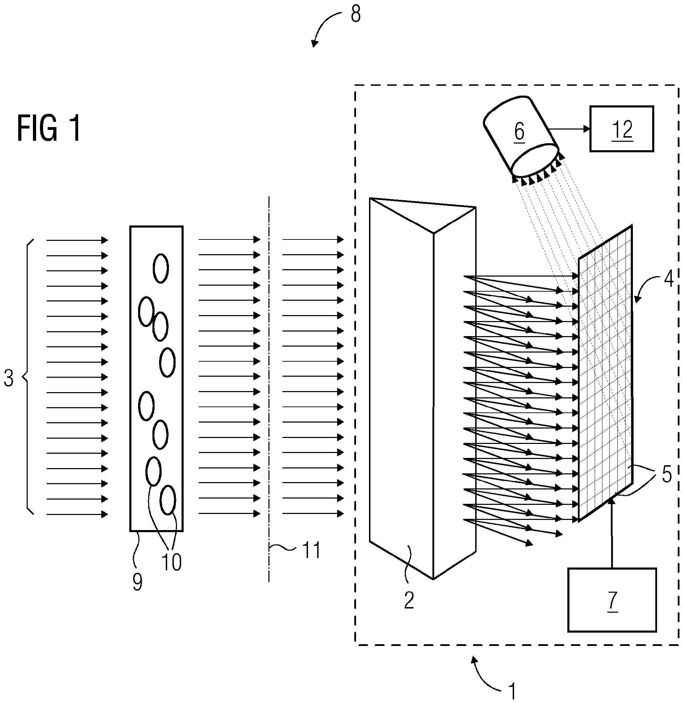

According to an exemplary embodiment, the flow cytometer further includes a light filter adapted to filter a remaining light array which has not created fluorescence and/or is scattered by the cells before the light array reaches the wavelength separator. Using the light filter stops unwanted ray of lights which have not created fluorescence and/or are scattered by the cells to increase the accuracy and efficiency of the light ray detection by the flow cytometer. FIG 1 shows a schematic diagram of a flow cytometer using a light detecting system.

Various embodiments are described with reference to the drawing, wherein like reference numerals are used to refer to single elements throughout. In the following description, for purpose of explanation, numerous specific details are set forth in order to provide a thorough understanding of one or more embodiments. It may be evident that such embodiments may be practiced without these specific details.

FIG 1 shows a schematic diagram of a flow cytometer 8 as an application of a light detecting system 1, wherein the flow cytometer 8 includes a flow cell tube 9, the light detecting system 1 and a light filter 11 to cooperate together to detect spectral response 12 of cells 10 flowing in the flow cell tube 9 when an array of light rays 3 falls onto the cells 10 inside the flow cell tube 9 to create fluorescence and/or be scattered by the cells 10 and further to be passed through a light filter 11 to filter out remaining light rays 3 which have not created fluorescence and/or are scattered by the cells 10, before the array of light rays 3 reaches the light detecting system 1.

The flow cell tube 9 is an optical tube which allows passing on the array of light rays 3 without obstructing the light rays 3. The flow cell tube 9 is a hollow tube and cylindrical in shape which allows fluids to pass through along with cells 10 under optical observations. The light rays 3 enter into the flow cell tube 9 non-parallel and/or non-anti-parallel to the flow direction of the fluid and are obstructed by the cells 10 in the flow cell tube 9 to create fluorescence and/or scatter the light rays 3. On being scattered and/or having created fluorescence the light rays 3 move out of the flow cell tube 9 further unobstructed to the light filter 11.

The light filter 11 receives the light rays 3 after scattering and/or creating fluorescence to filter out remaining light rays 3 which have not created fluorescence and/or are scattered by the cells 10 before the light rays 3 reach the wavelength separator 2. In an alternate embodiment, the light filter 11 is not installed rather the remaining light rays 3 are filtered out by the micro-mirror module 4 by not selecting the wavelengths of the remaining light rays 3 to be reflected by the micro-mirrors 5 or during the analysis by the detector 6. The light filter 11 is an optical element such as a sheet of glass, gelatin, or plastic dyed in a specific manner to absorb selectively light rays 3 having specific property like wavelengths, etc.

The light detecting system 1 includes a wavelength separator 2 receiving an array of light rays 3 having a spectrum representing a range of wavelengths and separating the array into light rays 3 of different wavelengths from the range of wavelengths, a micro-mirror module 4 having a two-dimensional matrix of micro-mirrors 5 receiving the light rays 3 onto one of the micro-mirrors 5 of the matrix according to the wavelength of the light ray 3 and reflecting the light rays 3 with a selected wavelength, and a detector 6 receiving the light ray 3 and detecting the light ray 3 reflected from the micro-mirror 5, wherein the wavelength separator 2 separates the light rays 3 at different angles according to the wavelength of each of the light rays 3 to reach the light rays 3 at different columns of the two-dimensional matrix of the micro-mirror module 4.

The wavelength separator 2 is a an optical device which is receiving the fluorescence or scattered light rays 3 from the flow cell tube 9 to separate the light rays 3 into different directions to reach onto different micro-mirrors 5 of the micro-mirror module 4. The wavelength separator 2 can be a grating device or a prism or combination thereof, or any other such device which is adapted to separate the light rays 3 at different angles according to their wavelengths.

The micro-mirror module 4 is a two-dimensional matrix of micro-mirrors 5 which receives the light rays 3 from the wavelength separator 2, in such a way that the light rays 3 scattered or the fluorescence created by each of the cells 10 at a particular location in the flow cell tube 9 are received along a column of the matrix of micro-mirror module 4 and the light rays 3 being reflected by a particular cell at different locations in the flow cell tube 9 reach a particular row of the matrix of micro-mirror module 4. The micro-mirror module 4 is a digital micro-mirror device which is a semiconductor optical device which enables the micro-mirrors 5 of the module 4 to be on and off, so that when a micro-mirror 5 is "on" than the micro-mirror 5 is enabled to reflect and when a micro-mirror 5 is "off", it is disabled to reflect. Alternatively, the micro-mirrors 5 in the module 4 can be movable around two axes to be mechanically misaligned with respect to the direction of light rays 3 from the wavelength separator 2.

The micro-mirrors 5 are controlled by using a controller 7 to control selection of micro-mirrors 5 of micro-mirror module 4 to enable the micro-mirrors 5 to reflect the light rays 3 of the selected wavelength onto the detector 6. The controller 7 controls the micro-mirrors 5 electronically to switch on the selection of micro-mirrors 5 of micro-mirror module 4 to enable the selected micro-mirrors 5 to reflect the light rays 3 of the selected wavelength onto the detector 6. In an alternate embodiment, the controller 7 controls the selection of the micro-mirrors 5 of micro-mirror module 4 by mechanically aligning the selection of the micro-mirrors 5 to be enabled to reflect the light rays 3 of selected wavelengths onto the detector 6. Yet alternatively, the light detecting system 1 can use the controller 7 which can control the micro-mirrors 5 electronically as well as mechanically. The detector 6 detects the light rays 3 reflected from the micro-mirror 5 by identifying intensity of each of the light rays 3 reflected by different micro-mirrors 5 of micro-mirror module 4 and summing up intensities of the light rays 3 to provide a result 12. The detector 6 detects the light rays 3 by either identifying intensity of each of the light rays 3 reflected by the micro-mirrors 5 along a column of the micro-mirror module 4 for determining spectral behavior 12 of each of the cells 10 at a particular location inside the flow cell tube 9, or by identifying intensity of each of the light rays 3 reflected by the micro-mirrors 5 along a row of the micro-mirror module 4 for determining spectral behavior 12 of particular cell 10 at different locations in the flow cell tube 9.

### List of Reference Signs

- 1: a light detecting system
- 2: a wavelength seprator
- 3: light rays
- 4: micro-mirror module
- 5: micro-mirrors
- 6: detector
- 7: controller
- 8: flow cytometer
- 9: flow cell tube
- 10: cells
- 11: light filter
- 12: results, spectral behavior

## Claims

1. A light detecting system (1) comprising:
- a wavelength separator (2) for receiving an array of light rays (3) having a spectrum representing a range of wavelengths and separating the array into light rays (3) of different wavelengths from the range of wavelengths,
- a micro-mirror module (4) having a two-dimensional matrix of micro-mirrors (5) adapted to receive the light rays (3) onto one of the micro-mirrors (5) of the matrix according to the wavelength of the light rays (3) and adapted to reflect the light rays (3) with a selected wavelength,
- a detector (6) adapted to receive the light rays (3) and detect the light rays (3) reflected from the micro-mirrors (5),
wherein the wavelength separator (2) is adapted to separate the light rays (3) at different angles according to the wavelength of each of the light rays (3) to reach the light rays (3) at different rows of the two-dimensional matrix of the micro-mirror module (4).

2. The system according to claim 1, wherein the detector (6) is adapted to detect the light rays (3) by identifying intensity of each of the light rays (3) reflected by different micro-mirrors (5) of the matrix of the micro-mirror module (4) and summing up intensities of the light rays (3) to provide a result (12).

3. The system according to any one of claims 1 and 2 further comprising:
- a controller (7) adapted to control selection of micro-mirrors (5) of the matrix of the micro-mirror module (4) to be enabled to reflect the light rays (3) of the selected wavelengths onto the detector (6).

4. The system according to claim 3, wherein the micro-mirror module (4) is electronically controlled, such that the controller (7) is adapted to switch on the selection of the micro-mirrors (5) of micro-mirror module (4) to be enabled to reflect the light rays (3) of the selected wavelength to the detector (6).

5. The system according to claim 3, wherein the controller (7) is adapted to control the selection of the micro-mirrors (5) of the micro-mirror module (4) by mechanically aligning the selection of the micro-mirrors (5) to be enabled to reflect the light rays (3) of selected wavelengths onto the detector (6).

6. The system according to any one of claims 1 to 5,
wherein the wavelength separator (2) is either a grating element or a prism or a combination thereof.

7. The system according to any one of claims 1 to 6,
wherein the detector (6) is either a photomultiplier detector or a photo diode or a combination thereof.

8. A flow cytometer (8) comprising:
- a flow cell tube (9) for receiving a fluid containing cells (10) for analysis and adapted to pass an array of light rays (3) through the fluid and adapted to create fluorescence from the light rays (3) and/or to scatter the light rays (3) when the light rays (3) collide the cells (10),
- a light detection system (1) according to any one of claims 1 to 7,
wherein the flow cell tube (9) and the light detection system (1) are arranged to pass the light array (3) through the flow cell tube (9) by scattering and/or creating fluorescence from the light rays (3) by the cells (10) onto the light detection system (1), such that the wavelength separator (2) is adapted to separate each of the light rays (3) at different angles to reach at different rows of micro-mirror module (4) on a basis of scattering and/or creating fluorescence from light rays (3) by different cells (10).

9. The flow cytometer according to claim 8, wherein the detector (6) is adapted to detect the light rays (3) by either
- identifying intensity of each of the light rays (3) reflected by the micro-mirrors (5) along a column of the micro-mirror module (4) for determining spectral behavior (12) of each of the cells (10) at a particular location inside the flow cell tube (9), or
- identifying intensity of each of the light rays (3) reflected by the micro-mirrors (5) along a row of the micro-mirror module (4) for determining spectral behavior (12) of particular cell (10) at different locations in the flow cell tube (9).

10. The flow cytometer according to any one of claims 9 and 10 further comprising:
- a light filter (11) adapted to filter a remaining array of light rays (3) which have not created fluorescence and/or being scattered by the cells (10) before the array of light rays (3) reaches the wavelength separator (2).

11. A method for detecting light rays (3) comprising:
- receiving an array of light rays (3) having a spectrum representing a range of wavelengths and separating the array into light rays (3) of different wavelengths from the range of wavelengths by a wavelength separator (2),
- further receiving the light rays (3) onto one of the micro-mirrors (5) of a micro-mirror module (4) according to the wavelength of the light rays (3) and reflecting the light rays (3) with a selected wavelength by the micro-mirrors (5),
- receiving the light rays (3) after being reflected by the micro-mirrors (5) and detecting the light rays (3) by a detector (6),
wherein the wavelength separator (2) is adapted to separate the light rays (3) at different angles according to the wavelength of each of the light rays (3) to reach the light rays (3) at different rows of the two-dimensional matrix of the micro-mirror module (4).

12. The method according to claim 11, wherein the light rays (3) are detected by
- identifying intensity of each of the light rays (3) reflected by different micro-mirrors (5) of the matrix of micro-mirror module (4), and
- summing up intensities of the light rays (3) for providing a result (12).

13. The method according to any one of claims 11 and 12, comprising:
- controlling selection of micro-mirrors (5) of the matrix of micro-mirror module (4) by using a controller (7) to enable the micro-mirrors (5) to reflect the light rays (3) of the selected wavelengths onto the detector (6).

14. The method for detecting light rays in a flow cytometer (8) according to any one of claims 10 to 13, comprising:
- flowing a fluid containing cells (10) inside a flow cell tube (9) and passing the array of light rays (3) through the fluid to create fluorescence and/or scatter the light rays (3) when the light rays (3) collide the cells (10),
- receiving the light rays (3) by the wavelength separator (2) after creating fluorescence and/or being scattered by the cells (10), and
- separating each of the light rays (3) at different angles by the wavelength separator (2) to reach at different rows of micro-mirror module (4) on a basis of scattering and/or creating fluorescence from the light rays (3) by different cells (10).

15. The method according to claim 14, wherein detecting the light rays (3) by the detector (6) comprises either
- identifying intensity of each of the light rays (3) reflected by the micro-mirrors (5) along a column of the micro-mirror module (4) for determining spectral behavior (12) of each of the cells (10) at a particular location inside the flow cell tube (9), or
- identifying intensity of each of the light rays (3) reflected by the micro-mirrors (5) along a row of the micro-mirror module (4) for determining spectral behavior (12) of a particular cell (10) at different locations in the flow cell tube (9).

16. The method according to any one of claims 14 and 15, comprising:
- filtering a remaining light array (3) which has not created fluorescence and/or is scattered by the cells (10) by a light filter (11) before the light array (3) reaches the wavelength separator (2).
